# EUROPEAN PATENT SPECIFICATION

(11) **EP 3 196 530 B1**
(45) Date of publication and mention of the grant of the patent: **01.08.2018**
(21) Application number: 17151982.0
(22) Date of filing: 18.01.2017
(51) Int. Cl.: F16L 59/18, E04F 17/02, F23J 13/02, E04F 19/00

(54) **A DOUBLE-WALLED PIPE WITH INSULATION IN THE FORM OF JOINT-FITTED ELEMENTS**
ISOLIERTES DOPPELWANDROHR AUS ZUSAMMENGESTECKTEN ELEMENTEN
CANALISATION ISOLEE A DOUBLE PAROI FORMEE AVEC ELEMENENTS EMBOÎTES

(30) Priority: 21.01.2016 IT UB20160517
(43) Date of publication of application: 26.07.2017
(73) Proprietor: Camini Wierer S.r.l., 37055 Ronco all'Adige (Verona) (IT)
(72) Inventor: WIERER, Christian, 37055 RONCO ALL'ADIGE (Verona) (IT)
(74) Representative: Anselmi, Davide

(56) References cited:
- EP-A1- 1 065 430
- DE-A1- 19 909 788
- DE-C1- 10 010 692
- DE-U1- 7 820 996
- DE-U1- 8 508 131
- FR-A- 959 872

## Description

### Field of application

The present invention relates to a double-walled pipe for realising manufactured products for discharge of fumes by consecutive insertion of a plurality of elements in succession. In particular, it should be noted that the passage of fumes and/or other gases can be forced (e.g. using a fume extraction fan) or not.

In the preferred (though not exclusive) case, the present invention is used for evacuating fumes deriving from combustion and/or for extraction of kitchen vapours (for example starting from a kitchen fume hood) and/or for ventilation of rooms and/or for extraction of fumes in case of fire, thus guaranteeing fire resistance in case of a conflagration.

More precisely the invention relates to a joining system between insulating elements located internally of the gap between a first internal tubular pipe, in direct contact with the fumes, and a second external tubular pipe concentric to the preceding pipe.

Said joining system between the insulating elements is directed at establishing a consecutive continuity between the elements, preventing the formation of thermal bridges and ensuring maximum insulation between the inside and outside of the discharge pipe, enabling a resistance to fire from outside and also the possibility of extraction of the fumes in case of fire.

The present invention is advantageously applied in the building sector and in particular in the field of devices for fume discharge or for the passage of other gases with the aim of realising an extraction of the fumes to the outside.

### Prior Art

It is known that in the civil or industrial building sector, for heating rooms and for the operation of some work processes in which production of heat is required, means are used which produce fumes that must be evacuated to outside the rooms, so that they can be discharged into the atmosphere.

At present fumes evacuation systems comprise a chimney constituted by a generally vertical pipe (or one with some curved parts) having the aim of collecting and expelling, at a suitable height from the ground, the fumes or other gases.

Generally the chimney is realised by using discharge pipes of various types, one of most commonly used of which is constituted by pipes realised by multiple and reciprocal joining of generally circular pipe sections made of stainless steel, positioned one above the other by consecutive insertion of a plurality of elements in succession, so as to facilitate the storage, transport and assembly steps of the product.

The various pipe sections are joined to one another, using various types of fitting, the simplest of which involves the tube sections being identical to one another, with conical profiling in the upper and lower parts thereof, having a same angulation and which enter or project with respect to the tubular surface, realising male ends with a smaller diameter which fit into female ends having a larger diameter.

Generally the female ends are arranged in the upper part of each section, while the male ends are arranged in the lower part, so that the male end is fitted by lowering the upper section from above into the lower female end.

As well as from being constituted by single-walled elements as described above, flue pipes can also be of the double-walled type, in which case the pipes are more high-performance as a gap is formed in them in which refractory material or insulating material is inserted, normally constituted by mineral wool arranged loosely or in a single cylindrical sleeve introduced between the walls of the two concentric tubes.

The purpose of the gap in which insulating material is inserted is to prevent hazardous situations developing which are caused by any contact with the external tube, which must therefore necessarily remain at a low temperature, as well as maintaining the fumes at a high temperature in order to obtain an optimal up-draught.

In a first known embodiment, the external tube and the internal tube, which are constituted by multiple sections of tubular pipes inserted one consecutively to another, are initially unconnected to one another, and the insulating cladding is constituted by sleeves made of a rigid insulating material inserted between the internal tube and the external tube for realising a substantially rigid structure.

In a second embodiment, known to the technical expert in the sector, use is made of modular fume pipe elements each of which respectively comprises an internal tube, having a predetermined length and appropriately beaker-formed at an end thereof for facilitating insertion therein of a like overlapped element, an external tube, arranged coaxially to the preceding element, and an insulating cladding arranged between the tubes.

According to this embodiment, the ends of the internal and external tubes are respectively connected to one another by means of metal circular crowns which perform not only the function of connections between the tubes but also that of containing the mineral wool which is comprised between the tubes, a consistency of which is, in this case, much less compact than the consistency of the sleeves.

The different embodiments of double-walled flue pipes, some of which have been described, imply drawbacks and hindrances, which essentially originate from the inhomogeneity between the sections of sleeves which in the joining zones of the pipe sections constituting the product are disconnected, forming thermal bridges between the inside and outside which can cause transfer of a significant quantity of heat from the internal tube towards the external tube, creating zones, at the joining points, at a high temperature and therefore possibly hazardous.

Further, in the case of crowns which connect the ends of the internal and external tubes positioned with the aim of dissipating a greater quantity of heat, the diameter thereof is maintained relatively large, with the result of having to provide external tubes having a relatively significant diameter, with considerable waste of steel.

According to further solutions known in the art, aimed at obviating a part of these drawbacks, the metal crown is constituted by a net or a series of radial elements which join the tubes, or, in a further solution, the internal tube and the external tube are connected by a series of metal tie rods incorporated in a heat-expandable material forming the gap between the two tubes.

In general the traditional solutions relating to double-walled pipes have drawbacks inherent in the discontinuity between the various insulating elements in the join zones, which create heat-dispersing points or sectors where the heat passes from inside towards the outside, which leads to the possibility of potential danger.

DE 199 09 788 A1 discloses a double-walled pipe comprising longitudinal segments with an inner pipe, an outer pipe and an insulation layer between inner and outer pipes. Consecutive segments are joint by male-female constructions.

### Description of the invention

The present invention relates to providing a connecting system between evacuating modules of fumes and/or gases, or for conveying air, being a system of pipes having a double-wall which comprises insulating means of a joint type, thus creating a condition able to obviate the above-mentioned drawbacks.

The invention relates to providing a connecting system between evacuating modules of fumes and/or gases, of a system of pipes having a double-wall which comprises insulating means of a joint type, so as to prevent thermal bridges, which are a source of possible danger due to the high temperature in the sector external of the pipes.

This is obtained by means of a connecting system between double-walled modules for evacuation of fumes and/or gases, the characteristics of which are described in the main claim.

The dependent claims of the present solution delineate advantageous embodiments of the invention.

The connecting system of the invention substantially comprises a plurality of double-walled tubular modules, each of which is provided with a male end on one side and a female end on the other side, and a gap constituted by a sleeve the male end or female end of which are profiled in the join zones so as to obtain a reciprocal joint of the gaps in the join zones of the modular elements.

According to the invention, the insulating layer confers a significant resistance to fire for a prolonged time, due to the characteristics thereof of thickness, density and homogeneity.

Also included is the use of a ring made of compressible ceramic fibre which on being inserted in the lower part of the joint, expands by pressing in a cushioning way between the layers of insulating material, with a greater guarantee of the seal between the insulating parts due to the continuous force in the homogeneity of the insulation.

### Description of the drawings

Further characteristics and advantages of the invention will be evident from reading the following description of an embodiment of the invention by way of non-limiting example with the aid of the figures illustrated in the appended tables of drawings, in which:
- figure 1 is a schematic view in section made in a vertical plane of a modular tubular element of the double-walled type according to the invention which represents one of the elements which, together with other like elements, forms a fumes extraction pipe;
- figure 2 illustrates a view of two tubular modules having a double-wall according to the invention consecutively connected to one another;

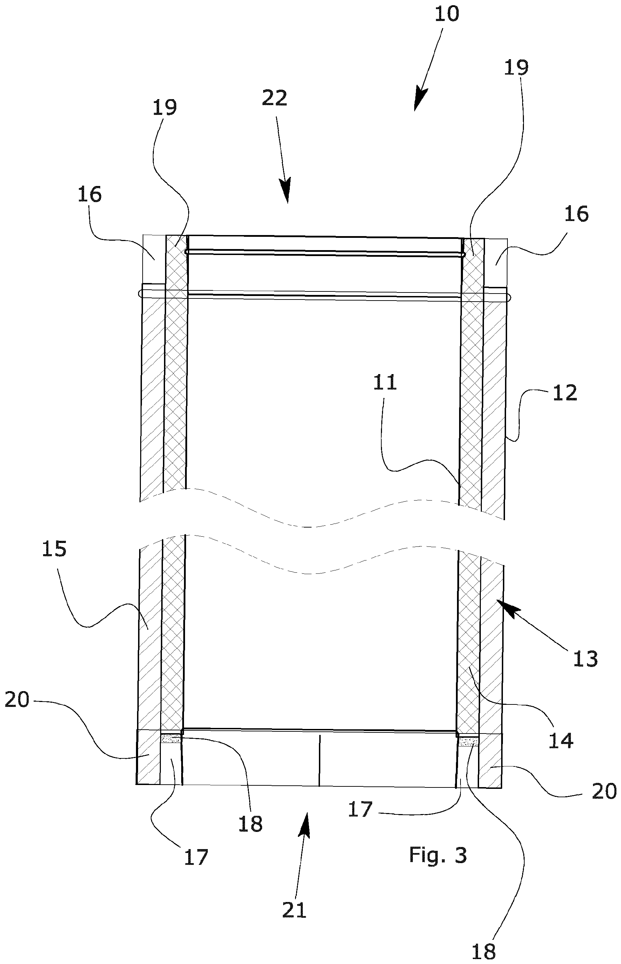

- figure 3 is a larger-scale schematic view of a double-walled tubular module according to the invention;

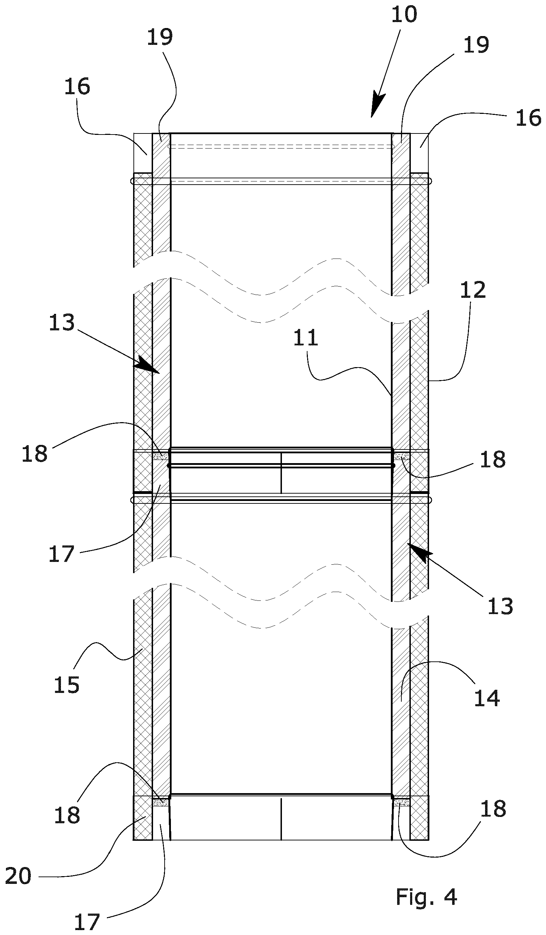

- figure 4 is a schematic and detailed view of a section of pipe formed by a joining of two double-walled tubular modules.

### Description of an embodiment of the invention

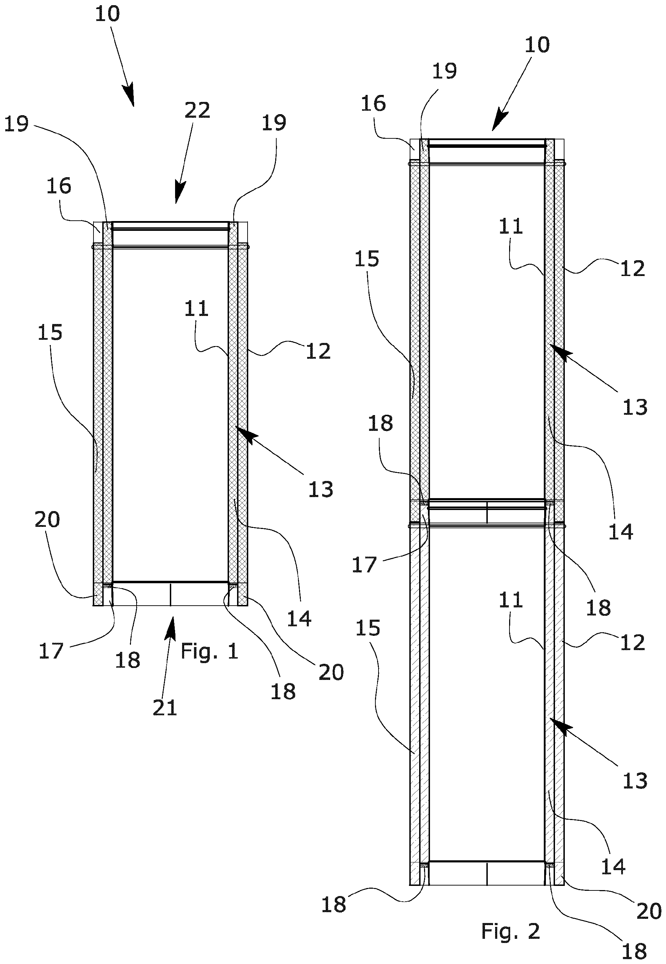

With reference to the appended figures, and initially in particular figure 1, reference numeral 10 denotes in its entirety one of the double-walled tubular modules which make up, together with other like tubular modules, a pipe for evacuation of fumes and/or gases.

The double-walled tubular modules 10 are preferably made of a metal material, and in particular of stainless steel (in other variants they might be made of other materials, such as plastic), and each of them respectively comprises an internal tube 11, having a predetermined length and appropriately beaker-formed at an end thereof for facilitating insertion therein of a like overlapped element, and an external tube 12, arranged coaxially to the preceding element.

Each of the ends of the internal tubular elements and the external elements is produced by pressing in order to obtain different profiles at one end and another, so as to enable reciprocal coupling.

According to the invention, an insulating cladding 13 is arranged internally of the gap formed between the external tube 12 and the internal tube 11, the male end 21 and female 22 end of which insulating cladding 13 are profiled, in the join zones, so as to obtain the reciprocal joint of the gaps of a plurality of modular elements joined in the join zones of the modular elements, preventing the possibility of thermal bridges.

More precisely, as can be seen in figure 1, the insulating cladding 13 comprises two concentric sleeves 14, 15, one internal of another, reciprocally neared and made of a refractory material.

One of the possible refractory materials with which the sleeves are made comprises compacted rock wool.

A characteristic of the invention is represented by the fact that the concentric sleeves 14 and 15 are staggered in a longitudinal direction with respect to the axis thereof, so as to form, at ends thereof, annular recesses denoted by reference numeral 16 in the upper end and by reference numeral 17 in the lower end.

As is visible in figure 1, the upper annular recess 16 comprises an annular cavity facing towards the external edge, while the lower joint zone 17 comprises an annular cavity facing towards the internal edge.

This arrangement enables, during the reciprocal joint between the modular elements 10 making up the fume pipe, the upper section of sleeve in which the annular recess facing the external edge is realised to couple with the respective lower annular recess 17 of the adjacent sleeve, forming a joint overlap, as can be seen in figure 2.

The joint overlap realised during the coupling of the sleeves 13 in the joining step of the tubular modules 10 determines a condition of almost perfect continuity, in fact obtaining thermal insulation between the external tube 12 and the internal tube 11.

This condition prevents formation of thermal bridges between the external tube 12 and the internal tube 11 of each modular tubular element 10, obtaining the condition of perfect insulation as described in the foregoing.

In a further embodiment, the double sleeve of the gap 13, which in the preceding solution comprised two concentric sleeves 14 and 15, one internal of the other, reciprocally neared and realised in refractory material, is made as a single sleeve and profiled at the ends in order to obtain a configuration similar to the configuration obtained in two parts, i.e. in such a way as to form, at the ends thereof, a joint annular recess 16 in the upper end 17 and the lower end.
According to the present invention, the internal tube 11 of a module 11 terminates, at the female end 22, with a cone-formed end which broadens progressively towards an outside of the tube. The internal tube 11 of a further module 10 to be joined to the first internal tube, at the male end 21, with a cone-formed end which narrows progressively towards an outside of the tube so as insert internally of the female end 22 of the first module 10. The cone-formed ends of the two modules 10 to be joined substantially have a same conical angle so as to define a mechanical join and a seal against fumes. In other words, the coupling of the internal tubes of two consecutive modules to be joined is of a double-coned type.
The recess 17 is realised at the male end 21 of a module between the external surface of the internal tube and the rest of the cladding 13 in a radial direction with respect to the tubular element. The projection 19 is realised at the female end 22 of a further module between the external surface of the internal tube and a rest of the cladding 13 in a radial direction with respect to the tubular element, so as to insert internally of the recess 17 of the first module. In this way, a joint is made between the two claddings of the modules neared so as to define a continuous insulation including at the join zone.
The recess 16 is realised at the female end 22 between the external tube 12 and the rest of the cladding 13 in a radial direction with respect to the tubular element. The projection 20 is realised at the male end 21 between the external tube and a rest of the cladding 13 in a radial direction with respect to the tubular element, so as to insert internally of the recess 16 of the module to be joined.
Note that a frontal top part of the projections 19, 20 of the cladding 13, the edge of the internal tube 11 and the edge of the external tube 12 are substantially coplanar according to a perpendicular plane to the axis of the tubular element.
In other words, the internal tube 11 and the external tube 12 (preferably made of a metal material) are coaxial and axially aligned, so that the recesses 16 and 17 are respectively defined between the internal surface of the external tube 12 and the projection 19, and between the external surface of the internal tube 11 and the projection 20.
In still other words, while the internal tube 11 and the external tube 12 of a same module are axially aligned, the cladding 13 comprises two sleeves axially staggered but still able to enter into the gap comprised between the two tubes.
Concerning the external tubes 12 of two consecutive modules to be joined, they do not have respective cone-formed ends but simply cylindrical ends. Naturally, the diameter of the cylindrical ends of the male end 21 of a first module is smaller than the diameter of the cylindrical ends of the female end 22 of a further module to be joined to the first so that the external tube of the male end inserts internally of the external tube of the female end.
In other words, the external tubes of two joined modules mutually overlap so as to close the fitting.

According to the invention, also included is use of a ring 18 made of compressible ceramic fibre which is inserted in the lower part of at least one of the sleeves of the joint, in particular the internal sleeve 14.

The ring 18, being made of an elastic material, compresses starting from an expanded condition during the consecutive joining of the sleeves, and presses in a cushioning way between the layers of insulating material in contact, with a greater guarantee of the seal between the insulating parts due to the continuous force in the homogeneity of the insulation.

According to further embodiments, the joint annular zones can be obtained with suitable refractory material, moulded or obtained with any production method on the condition that they are fashioned in the annular zones that during the joining step between tubular modules 10, lead to a joint overlap between an internal part and an external part with respect to the body of each tubular module 10.

As can be observed, the pipe of the present invention guarantees a perfect seal against the heat conductivity in the join zones between the various modules is it made of, enabling best use thereof for evacuating fumes deriving from combustion and/or for extraction of kitchen vapours and/or for ventilation of rooms and/or for extraction of fumes in case of fire, in particular guaranteeing fire resistance in case of conflagration.

Indicatively and by way of example, the fire resistance times to fire coming from outside, in case of fire, and calculated using insulation of standard thickness joined using the system of the invention are around 120 minutes.

The invention has been described in the above with reference to a preferred embodiment thereof. However it is clear that the invention is susceptible to numerous variants which fall within the scope of the claims.

## Claims

1. A double-walled pipe for realising manufactured products for discharge of fumes and/or for extraction of vapours and/or for ventilation of rooms and/or for extraction of fumes, by consecutively inserting a plurality of double-walled modules (10) that are joined in succession, comprising:
a plurality of modules, each comprising a respective double-walled tubular element; each double-walled tubular element extending between a male end (21) and a female end (22) and comprising an internal tube (11) and an external tube (12), arranged coaxially with respect to the internal tube (11) so as to define a double-walled structure; each tubular element comprising an internal gap arranged between said external tube (12) and said internal tube (11) in which an insulating cladding (13) is arranged,
ends of two joined tubular elements comprise respective recesses (16, 17) and projections (19, 20) extending towards the other tubular element and involving only a part of the thickness of the cladding (13) in a radial direction with respect to the tubular element so that in the joined configuration a reciprocal overlapped joint of the recesses (16,17) with the projections (19, 20) is realised between each module and an adjacent module;
**characterised in that** the internal tube (11) of a module (10) terminates, at the female end (22), with a cone-formed end which broadens progressively towards an outside of the tube in the axial direction; the internal tube (11) of a further module (10) to be joined to the first internal tube (11) terminates, at the male end (21), with a cone-formed end which narrows progressively towards an outside of the tube in the axial direction so as to insert internally of the female end (22) of the first module (10); said cone-formed ends of the two modules (10) to be joined substantially having a same conical angle so as to define a mechanical conjunction and a seal against fumes; one of said recesses (17) (17) being realised at the male end (21) of a first module between the internal tube and a rest of the cladding (13) in a radial direction with respect to the tubular element, and one of said projections (19) being realised at the female end (22) of a further module between the internal tube and a rest of the cladding (13) of the first module joint to the further module in a radial direction with respect to the tubular element, so as to insert internally of the recess (17) of the first module.

2. The double-walled pipe for realising manufactured products according to any one of the preceding claims, **characterised in that** one of said recesses (16) is realised at the female end (22) between the external tube (12) and the rest of the cladding (13) in a radial direction with respect to the tubular element.

3. The double-walled pipe for realising manufactured products according to claim 2, **characterised in that** one of said projections (20) is realised at the male end (21) between the external tube and a rest of the cladding (13) in a radial direction with respect to the tubular element, so as to insert internally of the recess (16) of the module to be joined.

4. The double-walled pipe for realising manufactured products according to any one of the preceding claims, **characterised in that** a frontal top part of the projections (19, 20) of the cladding (13), the edge of the internal tube (11) and the edge of the external tube (12) are substantially coplanar according to a perpendicular plane to the axis of the tubular element.

5. The double-walled pipe for realising manufactured products according to any one of the preceding claims, **characterised in that** the insulating cladding (13) comprises two concentric sleeves (14, 15), one internal of another, reciprocally neared and made of a refractory material.

6. The double-walled pipe according to claim 5, **characterised in that** said two concentric sleeves (14, 15), which constitute the insulation (13), are staggered in a longitudinal direction with respect to an axis thereof, so as to form, at the ends thereof, annular recesses (16, 17) and projections (19, 20) that are staggered between the male end (21) and the female end (22) .

7. The double-walled pipe according to any one claims 5 or 6, **characterised in that** one of the annular recesses (16, 17) of the insulating layer (13) comprises an annular cavity facing towards the external tube (12) at the female end (22), while the joint recess opposite the preceding joint recess comprises an annular cavity facing towards the internal tube at the male end (21).

8. The double-walled pipe according to any one claims 6 or 7, **characterised in that**, during a joint configuration of the double-walled modular elements (10) making up the fume pipe, the section of sleeve (13) of a module in which the annular recesses (16, 17) and projections (19, 20) are coupled to a respective section of sleeve (13) of a further module, wherein the annular recesses (16,17) and projections (19, 20) are made oppositely with respect to the first so as to form a joint overlap.

9. The double-walled pipe according to any one of the preceding claims 1 to 4, **characterised in that** said cladding (13) is made of a single sleeve profiled at the ends thereof with annular recesses (16, 17) able to form annular zones and a reciprocal joint.

10. The double-walled pipe according to any one of the preceding claims, **characterised in that** said cladding (13) is made of a refractory material.

11. The double-walled pipe according to any one of the preceding claims, **characterised in that** it comprises a ring (18) made of a compressible elastic material arranged between a cladding part (13) of a module and a cladding part (13) of a further module destined to enter into contact with the first module so as to compress during the joint configuration.

12. The double-walled pipe according to claim 11, **characterised in that** said ring (18) of elastic material is arranged at the recess (17) of the male end (21) of a module.

## Patentansprüche

1. Doppelwandrohr zur Realisierung von hergestellten Produkten zur Ableitung von Rauch und/oder zur Absaugung von Dämpfen und/oder zur Belüftung von Räumen und/oder zur Absaugung von Rauch, durch aufeinanderfolgendes Einsetzen einer Vielzahl von hintereinander verbundenen doppelwandigen Modulen (10), umfassend:
eine Vielzahl von Modulen, die jeweils ein doppelwandiges rohrförmiges Element umfassen; wobei sich jedes doppelwandige rohrförmige Element zwischen einem männlichen Ende (21) und einem weiblichen Ende (22) erstreckt und ein Innenrohr (11) und ein Außenrohr (12) umfasst, der koaxial zu dem Innenrohr (11) angeordnet ist, um eine doppelwandige Struktur zu definieren; wobei jedes rohrförmige Element einen inneren Spalt umfasst, der zwischen dem äußeren Rohr (12) und dem inneren Rohr (11) angeordnet ist, in dem eine isolierende Verkleidung (13) angeordnet ist,
wobei die Enden zweier verbundener rohrförmiger Elemente entsprechende Vertiefungen (16, 17) und Vorsprünge (19, 20) umfassen, die sich zu dem anderen rohrförmigen Element hin erstrecken und nur einen Teil der Dicke der Verkleidung (13) in einer radialen Richtung in Bezug auf das rohrförmige Element miteinbeziehen, so dass in der verbundenen Konfiguration eine gegenseitige überlappende Verbindung der Vertiefungen (16, 17) mit den Vorsprüngen (19, 20) zwischen jedem Modul und einem benachbarten Modul realisiert wird;
**dadurch gekennzeichnet, dass** das Innenrohr (11) eines Moduls (10) am weiblichen Ende (22) mit einem kegelförmigen Ende endet, das sich in axialer Richtung progressiv zu einer Außenseite des Rohres hin erweitert;
das Innenrohr (11) eines weiteren Moduls (10), das mit dem ersten Innenrohr (11) zu verbinden ist, am männlichen Ende (21) mit einem kegelförmigen Ende endet, das sich in axialer Richtung progressiv zu einer Außenseite des Rohres hin verjüngt, so dass es innerhalb des weiblichen Endes (22) des ersten Moduls (10) eingesetzt wird; wobei die kegelförmigen Enden der beiden zu verbindenden Module (10) im Wesentlichen einen gleichen konischen Winkel aufweisen, um eine mechanische Verknüpfung und eine Dichtung gegen Rauch zu definieren; wobei eine der Vertiefungen (17) am männlichen Ende (21) eines ersten Moduls zwischen dem Innenrohr und einem Rest der Verkleidung (13) in einer radialen Richtung in Bezug auf das rohrförmige Element realisiert wird und wobei einer der Vorsprünge (19) am weiblichen Ende (22) eines weiteren Moduls zwischen dem Innenrohr und einem Rest der Verkleidung (13) des ersten Moduls, der mit dem weiteren Modul in einer radialen Richtung in Bezug auf das rohrförmige Element verbunden ist, realisiert ist, so dass er innerhalb der Vertiefung (17) des ersten Moduls eingesetzt wird.

2. Doppelwandiges Rohr zur Realisierung von hergestellten Produkten nach einem der vorhergehenden Ansprüche, **dadurch gekennzeichnet, dass** eine der Vertiefungen (16) am weiblichen Ende (22) zwischen dem Außenrohr (12) und dem Rest der Verkleidung (13) in radialer Richtung in Bezug auf das rohrförmige Element realisiert ist.

3. Doppelwandiges Rohr zur Realisierung von hergestellten Produkten nach Anspruch 2, **dadurch gekennzeichnet, dass** einer der Vorsprünge (20) am männlichen Ende (21) zwischen dem Außenrohr und einem Rest der Verkleidung (13) in radialer Richtung in Bezug auf das rohrförmige Element realisiert ist, so dass er innerhalb der Vertiefung (1) des zu verbindenden Moduls eingesetzt wird.

4. Doppelwandiges Rohr zur Realisierung von hergestellten Produkten nach einem der vorhergehenden Ansprüche, **dadurch gekennzeichnet, dass** ein vorderer oberer Teil der Vorsprünge (19, 20) der Verkleidung (13), der Rand des Innenrohres (11) und der Rand des Außenrohres (12) im Wesentlichen koplanar gemäß einer senkrechten Ebene zur Achse des rohrförmigen Elements sind.

5. Doppelwandiges Rohr zur Realisierung von hergestellten Produkten nach einem der vorhergehenden Ansprüche, **dadurch gekennzeichnet, dass** die Isolationsverkleidung (13) zwei konzentrische Hülsen (14, 15) umfasst, von denen eine in der anderen innenliegend, beidseitig genäht und aus einem feuerfesten Material bestehen.

6. Doppelwandiges Rohr nach Anspruch 5, **dadurch gekennzeichnet, dass** die beiden konzentrischen Hülsen (14, 15), die die Isolierung (13) bilden, in Längsrichtung in Bezug auf eine ihrer Achsen versetzt sind, um an ihren Enden ringförmige Vertiefungen (16, 17) und Vorsprünge (19, 20) zu bilden, die zwischen dem männlichen Ende (21) und dem weiblichen Ende (22) versetzt sind.

7. Doppelwandiges Rohr nach einem der Ansprüche 5 oder 6, **dadurch gekennzeichnet, dass** eine der ringförmigen Vertiefungen (16, 17) der Isolierschicht (13) einen dem Außenrohr (12) am weiblichen Ende (22) zugewandten ringförmigen Hohlraum umfasst, während die der vorangehenden verbundenen Vertiefung gegenüberliegende verbundene Vertiefung einen dem Innenrohr am männlichen Ende (21) zugewandten ringförmigen Hohlraum umfasst.

8. Doppelwandiges Rohr nach einem der Ansprüche 6 oder 7, **dadurch gekennzeichnet, dass** bei einer verbundenen Anordnung der das Rauchrohr bildenden doppelwandigen Modulelemente (10) der Hülsenabschnitt (13) eines Moduls, in dem die ringförmigen Vertiefungen (16, 17) und Vorsprünge (19, 20) mit einem jeweiligen Hülsenabschnitt (13) eines weiteren Moduls gekoppelt sind, wobei die ringförmigen Vertiefungen (16, 17) und Vorsprünge (19, 20) in Bezug auf die ersten gegenüberliegend ausgebildet sind, so dass sie eine verbundene Überlappung bilden.

9. Doppelwandiges Rohr nach einem der vorhergehenden Ansprüche 1 bis 4, **dadurch gekennzeichnet, dass** die Verkleidung (13) aus einer einzigen Hülse besteht, die an ihren Enden mit ringförmigen Vertiefungen (16, 17) profiliert ist, die ringförmige Zonen und eine gegenseitige Verbindung bilden können.

10. Doppelwandiges Rohr nach einem der vorhergehenden Ansprüche, **dadurch gekennzeichnet, dass** die Verkleidung (13) aus einem feuerfesten Material besteht.

11. Doppelwandiges Rohr nach einem der vorhergehenden Ansprüche, **dadurch gekennzeichnet, dass** es einen Ring (18) aus einem kompressiblen elastischen Material umfasst, der zwischen einem Verkleidungsteil (13) eines Moduls und einem Verkleidungsteil (13) eines weiteren Moduls angeordnet ist, das dazu bestimmt ist, mit dem ersten Modul in Kontakt zu treten, um während der verbundenen Konfiguration zu komprimieren.

12. Doppelwandiges Rohr nach Anspruch 11, **dadurch gekennzeichnet, dass** der Ring (18) aus elastischem Material an der Vertiefung (17) des männlichen Endes (21) eines Moduls angeordnet ist.

## Revendications

1. Canalisation à double paroi pour réaliser des produits manufacturés servant à évacuer des fumées et/ou pour l'extraction de vapeurs et/ou pour la ventilation de pièces et/ou pour l'extraction de fumées, par l'insertion de façon consécutive d'une pluralité de modules à double paroi (10) étant assemblés en succession, comprenant :
une pluralité de modules, comprenant chacun un élément tubulaire respectif à double paroi ; chaque élément tubulaire à double paroi se prolongeant entre une extrémité mâle (21) et une extrémité femelle (22) et comprenant un tube interne (11) et un tube externe (12) disposé coaxialement par rapport au tube interne (11) de manière à définir une structure à double paroi ;
chaque élément tubulaire comprenant un espace interne disposé entre ledit tube externe (12) et ledit tube interne (11) dans lequel est disposé un revêtement isolant (13), les extrémités de deux éléments tubulaires assemblés comprennent des renfoncements respectifs (16, 17) et des saillies (19, 20) se prolongeant vers l'autre élément tubulaire et impliquant seulement une partie de l'épaisseur du revêtement (13) dans une direction radiale par rapport à l'élément tubulaire de sorte que dans la configuration d'assemblage, un joint de chevauchement réciproque des renfoncements (16, 17) avec les saillies (19, 20) est réalisé entre chaque module et un module adjacent ;
**caractérisée en ce que** le tube interne (11) d'un module (10) se termine, à l'extrémité femelle (22), avec une extrémité conique qui s'élargit progressivement vers un extérieur du tube dans la direction axiale ;
le tube interne (11) d'un module supplémentaire (10) à assembler au premier tube interne (11) se termine, à l'extrémité mâle (21), avec une extrémité conique qui rétrécie progressivement vers un extérieur du tube dans la direction axiale de manière à s'introduire à l'intérieur de l'extrémité femelle (22) du premier module (10) ; lesdites extrémités coniques des deux modules (10) à assembler comportant substantiellement un angle conique identique de manière à définir une liaison mécanique et une étanchéité contre les fumées ;
l'un desdits renfoncements (17) étant réalisé en correspondance de l'extrémité mâle (21) d'un premier module entre le tube interne et une partie restante du revêtement (13) dans une direction radiale par rapport à l'élément tubulaire, et une desdites saillies (19) étant réalisée en correspondance de l'extrémité femelle (22) d'un module supplémentaire entre le tube interne et une partie restante du revêtement (13) du premier module assemblé au module supplémentaire dans une direction radiale par rapport à l'élément tubulaire, de sorte à s'introduire à l'intérieur du renfoncement (17) du premier module.

2. Canalisation à double paroi pour réaliser des produits manufacturés selon l'une quelconque des revendications précédentes, **caractérisée en ce que** l'un desdits renfoncements (16) est réalisé en correspondance de l'extrémité femelle (22) entre le tube externe (12) et la partie restante du revêtement (13) dans une direction radiale par rapport à l'élément tubulaire.

3. Canalisation à double paroi pour réaliser des produits manufacturés selon la revendication 2, **caractérisée en ce que** l'une desdites saillies (20) est réalisée en correspondance de l'extrémité mâle (21) entre le tube externe (12) et une partie restante du revêtement (13) dans une direction radiale par rapport à l'élément tubulaire de sorte à s'insérer à l'intérieur du renfoncement (16) du module à assembler.

4. Canalisation à double paroi pour réaliser des produits manufacturés selon l'une quelconque des revendications précédentes, **caractérisée en ce qu'**une partie supérieure frontale des saillies (19, 20) du revêtement (13), le bord du tube interne (11) et le bord du tube externe (12) sont substantiellement coplanaires selon un plan perpendiculaire à l'axe de l'élément tubulaire.

5. Canalisation à double paroi pour réaliser des produits manufacturés selon l'une quelconque des revendications précédentes, **caractérisée en ce que** le revêtement isolant (13) comprend deux manchons concentriques (14, 15), l'un interne à l'autre, rapprochés réciproquement et constitués d'un matériau réfractaire.

6. Canalisation à double paroi selon la revendication 5, **caractérisée en ce que** lesdits deux manchons concentriques (14, 15), constituant l'isolation (13), sont décalés dans une direction longitudinale par rapport à leur axe, de sorte à former, à leurs extrémités, des renfoncements annulaires (16, 17) et des saillies (19, 20) étant décalées entre l'extrémité mâle (21) et l'extrémité femelle (22).

7. Canalisation à double paroi selon l'une quelconque des revendications 5 ou 6, **caractérisée en ce qu'**un des renfoncements annulaires (16, 17) de la couche isolante (13) comprend une cavité annulaire orientée vers le tube externe (12) en correspondance de l'extrémité femelle (22), alors que le renfoncement à jointure opposé au renfoncement à jointure précédant comprend une cavité annulaire orientée vers le tube interne en correspondance de l'extrémité mâle (21).

8. Canalisation à double paroi selon l'une quelconque des revendications 6 ou 7, **caractérisée en ce que**, dans une configuration d'assemblage des éléments modulaires à double paroi (10) constituant le tube à fumée, la section de manchon (13) d'un module, dans laquelle les renfoncements annulaires (16, 17) et les saillies (19, 20) sont couplés à une section respective de manchon (13) d'un module supplémentaire, dans laquelle les renfoncements annulaires (16, 17) et les saillies (19, 20) sont réalisés de façon opposés aux premiers de manière à former un assemblage à recouvrement.

9. Canalisation à double paroi selon l'une quelconque des revendications de 1 à 4, **caractérisée en ce que** ledit recouvrement (13) est constitué d'un seul manchon profilé à ses extrémités avec des renfoncements annulaires (16, 17) pouvant former des zones annulaires et un assemblage réciproque.

10. Canalisation à double paroi selon l'une quelconque des revendications précédentes, **caractérisée en ce que** ledit revêtement (13) est constitué d'un matériau réfractaire.

11. Canalisation à double paroi selon l'une quelconque des revendications précédentes, **caractérisée en ce qu'**elle comprend un anneau (18) constitué d'un matériau élastique compressible disposé entre une partie de recouvrement (13) d'un module et une partie de recouvrement (13) d'un module supplémentaire destiné à entrer en contact avec le premier module de manière à se comprimer durant la configuration d'assemblage.

12. Canalisation à double paroi selon la revendication 11, **caractérisée en ce que** ledit anneau (18) de matériau élastique est disposé en correspondance du renfoncement (17) de l'extrémité mâle (21) d'un module.
